**Europäisches Patentamt**

**European Patent Office**

**Office européen des brevets**

(19)

(11) Publication number: **0 131 351**
**A2**

(12) # EUROPEAN PATENT APPLICATION

(21) Application number: **84302037.1**

(22) Date of filing: **27.03.84**

(51) Int. Cl.⁴: **G 01 V 1/40**

(30) Priority: **05.07.83 US 510718**

(43) Date of publication of application:
**16.01.85 Bulletin 85/3**

(84) Designated Contracting States:
**DE FR GB NL**

(71) Applicant: **MOBIL OIL CORPORATION**
**150 East 42nd Street**
**New York New York 10017(US)**

(72) Inventor: **Angona, Frank Anthony**
**2650 Deephill Circle**
**Dallas Texas 75233(US)**

(74) Representative: **West, Alan Harry**
**Mobil Court 3 Clements Inn**
**London WC2A 2EB(GB)**

(54) A method of determining the permeability of a formation.

(57) In a method for determining the permeability of a formation, a borehole is traversed with a logging tool 10 having a transmitter 24 for transmitting low frequency acoustic energy. The transmitter 24 is pulsed at a plurality of locations in the borehole and the produced acoustic energy is detected at spaced first and second receivers 28, 32, each having a low frequency response sufficient to detect tube waves in the acoustic energy. The arrival times of a tube wave at each of the spaced receivers 28, 32 are determined for each of a plurality of locations in the borehole so that values can be calculated representing the velocity of the tube wave for each of the plurality of locations. A record of said values is then formed for the plurality of locations corresponding to the traversal of the borehole by the logging tool 10.

EP 0 131 351 A2

F-2304-L

## A METHOD OF DETERMINING THE PERMEABILITY OF A FORMATION

The present invention relates to a method for acoustic well-logging and, in particular, to a method for determining permeability of a formation.

It is well-known that measurements of the conductivity and porosity of a formation are important in determining whether hydrocarbons are located therein, the hydrocarbons being found as non-conductive fluids in porous rock formations. It is also well-known that hydrocarbons are generally not extractable from porous rock formations unless those formations are also permeable. At present, after hydrocarbons are detected, it is generally necessary to obtain a sidewall core of a given formation in order to measure permeability in the laboratory. Such a technique is time consuming and expensive.

Techniques of acoustic well-logging are also well-known, and the possible applicability of such techniques to the determination of the permeability of a formation was predicted by Rosenbaum in the article, "Synthetic Microseismograms: Logging In Porous Formations", Geophysics, Volume 39, Number 1 (February, 1974).

Rosenbaum investigated numerically, the ideal case of a borehole filled with an inviscid fluid surrounded by a formation that is porous and which conforms to Biot's theory. His investigation showed that the effect of the pore-fluid mobility on the calculated response is large and can be measured with an appropriate logging tool. He further predicted that the relative amplitude of a tube wave obtained from a sonic tool with a wide band frequency response would depend upon the permeability of the formation.

Reacting to the predictions of Rosenbaum, an attempt was made to employ standard sonic logging tools for the determination of permeability. In a paper entitled "Permeability Profiles From Acoustic Logging", by J. J. Staal and J. D. Robinson, presented to the 52nd Annual Fall Technical Conference and Exhibition of the Society of Petroleum Engineers of A.I.M.I., held in Denver, Colorado, October 9-12, 1977, it was reported that with a standard Schlumberger sonic probe having transmitter-receiver spacing of up to 5 feet (1.52 m), a correlation could be detected between permeability and tube wave attenuation.

While standard sonic logging tools might be applicable for permeability determination, a need exists for improved techniques for permeability determination. One such improved technique is described in published British Patent Application No. 2,090,975A in which a borehole is traversed with a tool having means for transmitting low frequency acoustic energy, the transmitting means is pulsed and the acoustic energy is detected at at least a first receiver. The receiver has a frequency response in the range between 0.1k Hz and 30k Hz, and is coupled to the transmitting means by a cable having a length exceeding about 5 feet (1.52 m) and, preferably, by a cable having a length of about 15 feet (4.57 m). Tube wave amplitude at this receiver is determined at a plurality of locations in the borehole. Changes in amplitude of the tube waves are then observed from one of a plurality of locations in the borehole with respect to another. The change in tube wave amplitude provides a measure of formation permeability. A second receiver may also be provided at which acoustic energy is detected. The second receiver is of the same type as the first and is situated at a distance of about 20 feet (6.1 m) from the transmitting means. When the second receiver is employed, the ratio of tube wave amplitude detected by the first receiver, to that detected by the second receiver, is observed at each of a plurality of locations in the borehole. Changes in this ratio also provide a measure of permeability of the logged formation.

While the technique described in British Patent Application No. 2,090,975A provides a measure of formation permeability, it is subject to being adversely affected by tube wave amplitude attenuating characteristics of the tool environment, and amplitude normalization processing is preferably employed to enhance the results. It would be desirable to have another technique available for determining permeability of a formation in situ which is not amplitude dependent and which could be used alone or as a confirmatory cross-check on the tube wave amplitude technique to improve reliability of the permeability measurements.

Accordingly, the invention resides in a method of determining the permeability of a formation, comprising the steps of:

traversing a borehole with a tool having means for transmitting low-frequency acoustic energy:

pulsing said transmitting means at a plurality of locations in said borehole to produce acoustic energy therein;

detecting for each location said produced acoustic energy at a first receiver having a low frequency response sufficient to detect tube waves in said acoustic energy;

detecting for each location said produced acoustic energy at a second receiver, spaced from the first, and having a low frequency response sufficient to detect tube waves in said acoustic energy;

determining respective arrival times of a tube wave at each of said first and second receivers for said plurality of locations;

determining a value representing the velocity of said tube wave from said arrival times for each of said plurality of locations; and

forming a record containing values representing tube wave velocity for each of said plurality of locations corresponding to the traversal of said borehole with said tool.

In the accompanying drawings, which illustrate one example of the invention:

Fig. 1 is a schematic diagram of a well logging system;

Fig.2 is a cross-sectional view of one of the receivers utilized in the tool shown in Fig. 1;

Figs. 3 and 4 are normalized wave train records obtained employing the well logging system of Fig. 1 showing the presence of tube waves;

Fig. 5 shows logs demonstrating the correlation of the actual permeability of a formation with tube wave slowness; and

Fig. 6 is a flow chart illustrating the processing steps employed in the present method.

Referring to the drawings, an acoustic well logging system includes a logging tool 10 which is connected by means of a first cable 11 to the up-hole components of the system which will be more fully described below. The logging tool 10 is situated down-hole within a well 12 which is filled with a fluid, such as drilling mud, indicated by reference numeral 14.

The up-hole components include a surface control panel 16 to which the cable 11 is directed over sheave 18. A motor 20, which is controlled from the surface control panel 16, operates the sheave 18 for raising or lowering the logging tool 10 in the well 12. An output means, such as a digital recorder 22, is electrically connected to the surface control panel for recording and/or displaying the date detected from the logging tool 10.

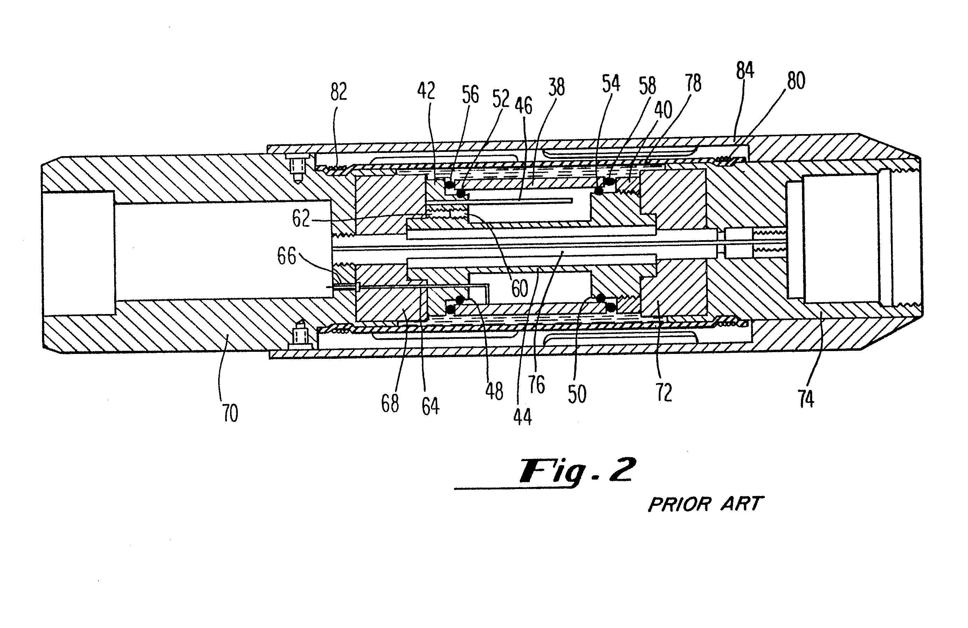

The logging tool 10 includes a transmitter 24 for transmitting a pulse of acoustic energy in the well 12. The pulse has a frequency spectrum centered about 20k Hz, but low frequencies extending at least to 1k Hz are also transmitted. Connected by means of a cable 26 from the transmitter means 24 is a first wide band acoustic receiver 28. The wide band acoustic receiver 28 is responsive to frequencies between 0.1k Hz and 30k Hz and will be more fully described with reference to Fig. 2 below. The length of cable 26 exceeds about 5 feet (1.52 m) and is, preferably,

substantially longer than that. Preferably, the distance between
the transmitter 24 and the first wide band receiver 28 is about 15
feet (4.57 m). Also, a second length of cable 30 connects the first
wide band acoustic receiver 28 with a second wide band acoustic
receiver 32 and, optionally, a third length of cable 34 connects the
second acoustic wide band receiver 32 with a third wide band
acoustic receiver 36. The distance between the second receiver 32
and the transmitter means 34 is preferably about 20 feet (6.1 m) and
the distance between the third receiver 36 and the transmitter means
24 is typically about 25 feet (7.62 m). The receivers 28, 32 and 36
are preferably not situated in an integral housing, but are coupled
to the transmitting means only by way of cables 26, 30 and 34.

It is well known that the first waves to arrive at each of
the receivers of an acoustic logging system are compressional waves,
usually followed by shear waves, then by mud waves and finally by
tube waves. The relatively long transmitter-to-receiver spacing
employed in this apparatus provides time for the various wave
packets to separate, such that the tube waves are more easily
detectable.

Since, in typical borehole conditions, the frequency of
tube waves will be of the order of 1500 Hz or less, the recording of
tube waves requires the use of the aforementioned wide band
receivers 28, 32 and 36. The bandwidth of the receivers is
substantially wider than the expected frequency of the tube waves,
which facilities detection of the tube waves by eliminating ringing
and other problems which might occur if a relatively narrow tube
wave pulse were passed through a narrow band receiver, and which
would make detection of arriving tube waves more difficult.

Referring to Fig. 2, one receiver 28 will be described in
detail, although the receivers 28, 32 and 36 are identical.
Generally, receivers having the bandwidth desired herein are not
capable of withstanding the severe environments encountered during acoustic logging. However, the receiver shown in Figure 2 has the required bandwith and yet is able to withstand high pressure. The receiver 28 includes a cylinder 38 of piezoelectric material which, to prevent dynamic pressure changes from being transmitted to the inside of the cylinder, is closed by end plates 40 and 42 joined by a spool 44.

Press-fitted into an opening in the end plate 42 is a tube 46 which, as will be more fully explained below, is tuned to the low cutoff frequency of the desired range, i.e., 0.11k Hz. The length and cross-sectional area of the inside of the tube 46 are such that dynamic pressure changes in the frequency range above the cutoff frequency are not transmitted through the tube, but the tube permits the equalization of static pressure between the outside and inside of the cylinder 38.

The end plate 42 has a portion 48 which fits inside the cylinder 38, and end plate 40 has a similar portion 50. Peripheral grooves in the portions 48, 50 receive O-rings 52 and 54, respectively, which isolate the piezoelectric material of the cylinder 38 from the metal end plates and seal the ends of the cylinder. O-rings 56 and 58 further isolate the piezoelectric material from the end plates. A hole 60 is provided in the end plate 42 such that the cylinder 38 may be evacuated and filled with oil. Thereafter, a set of screw 62 seals the oil in place.

The cylinder 38 has a conductive coating on its inside and outside surfaces and an electrical contact 64 is connected by a wire to the conductive inside surface of the cylinder. The contact 64 is connected to an electrical feed-through 66, which extends through the transducer support 68 mounted on the end plate 42 to the preamplifier (not shown) which is received in a housing 70 which carries the support 68.

A further transducer support 72 is mounted at the other end of the receiver and is supported by a further housing 74. A mandrel 76 extending through the center of the receiver joins the housings 70 and 74 together.

An oil-filled rubber boot 78 surrounds the receiver and wires 80 and 82 encircle the boot and secure it firmly to the housings 70 and 74.  A cage 84 surrounds and protects the boot and acoustic energy is in use transmitted by way of slots in the cage 84 through the boot 78 and the oil therein to the receiver, which is sensitive to the acoustic energy over the entire seismic frequency range and higher.  The boot 78 is, of course, arranged so as to be able to withstand the high pressures of deep boreholes.

The criticality of the dimensions of the passageway formed by the tube 46 can best be appreciated by reference to the analog electrical low-pass filter includes an inductance and capacitance.

The volume encased by the piezoelectric cylinder (tank) and the smaller diameter passageway (constriction) form an acoustic filter.  The material (water or oil) in the tank is stiffness controlled and is analogous to a capacitance.  The material in the constriction is mass controlled and therefore analogous to an inductance.  The capacitance can be expressed as:

$$C_\alpha = \frac{V}{\rho v^2} \tag{1}$$

where V is the volume of the material in the cylinder 38, v is the velocity of sound in this material, and    is the density of the material.

and the inductance as:

$$L_\alpha = \frac{L_e}{A_c} \tag{2}$$

where $L_e$ is the length of the tube 46, and $A_c$ is the cross-sectional area of the tube.

The cutoff frequency for such a low-pass filter is given by:

$$f_c = \frac{1}{\pi \sqrt{L_\alpha C_\alpha}} \tag{3}$$

where

--$L_\alpha$-- is the inductance, or inertia, and

--$C_\alpha$-- is the capacitance, or mass.

As an example, consider an embodiment where the inside diameter $d_2$ of the cylinder 38 is 1-3/8" inches (3.4925 cm), the diameter $d_1$ of the spool 44 is 5/8 inch (1.5875 cm), and the length L of the cylinder is 1.1875 inches (3.0163 cm). Also, the length $L_e$ of the tube 46 is 1.5 inches (3.81 cm), with an inside diameter of 1/64 inch (0.0397 cm).

The cross-sectional area of the tube 46 is:

$$A_c = \frac{\pi}{4} (0.0397)^2 \tag{4}$$

$$= .001237 \text{ sq. cm.}$$

Assuming the material in the cylinder 38 to be water, the inertia, which is equivalent to inductance, is given by:

$$L_\alpha = \rho \frac{L_e}{A_c} = 1 \times \frac{3.81}{.001237} \tag{5}$$

$$= 30.82 \times 10^2$$

The volume of the inside of the cylinder is:

$$V = \frac{\pi}{4} (d_2{}^2 - d_1{}^2)L$$

$$= \frac{\pi}{4} (3.4925^2 - 1.5875^2) (3.0163)$$

$$= 22.91 \text{ cc}$$

Mass, which is equivalent to capacitance, is given by:

$$C_\alpha = \frac{V}{\rho v^2} = \frac{22.91}{1.0 \times (1.5 \times 10^5)^2} \tag{7}$$

$$= 10.18 \times 10^{-10}$$

From the foregoing, the cutoff frequency for this specific embodiment is:

$$f_c = \frac{1}{\pi \sqrt{L_\alpha C_\alpha}} = \frac{.3185}{\sqrt{30.82 \times 10.18 \times 10^{-8}}} = \frac{.3185}{17.71 \times 10^{-4}} = 179.8$$

This indicates a low cutoff frequency of 180 Hz, which is improved considerably by filling the cylinder with oil. Such a cutoff frequency is sufficiently low to cause the receiver 28 to respond to tube waves.

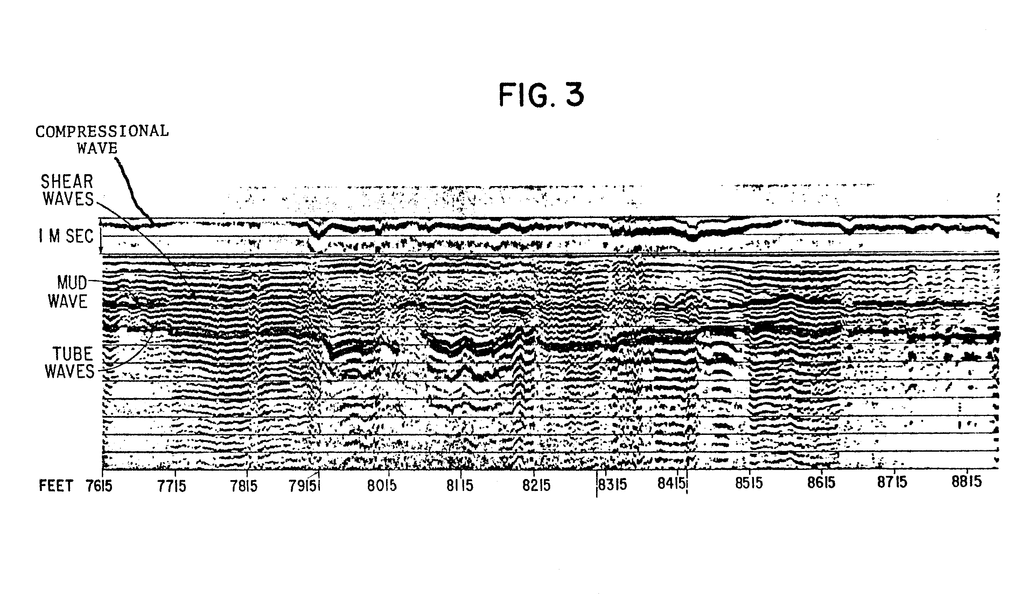

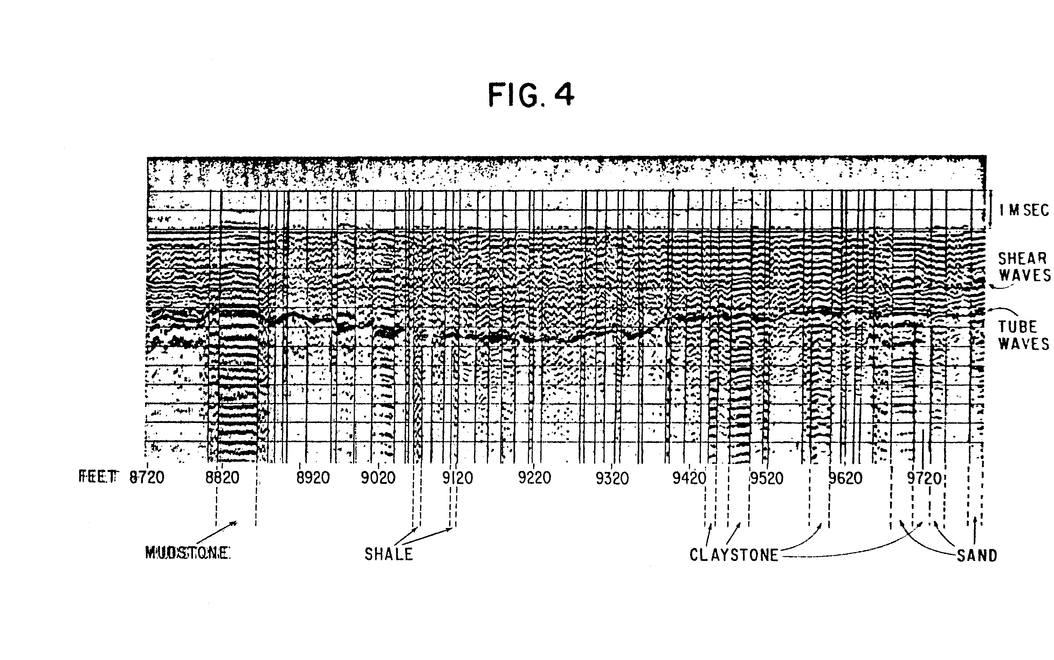

When the apparatus described is utilized to determine the permeability of a rock formation, the tool 10 is traversed along the bore-hole of the well 12 and the transmitter 24 is pulsed and acoustic energy is detected at receivers 28 and 32 (and 36, if the third receiver is employed). Preferably, for every foot (0.3048 m) along the borehole, a wave train of 10 msec. duration is recorded at the surface from each of receivers 28 and 32 (and 36, if used). This wave train is digitized, i.e., sampled, at, for example, 5 sec. intervals and stored. The digital data may be, but need not necessarily be, processed by a computer program which determines the time of the first arrival (P-wave), equalizes the amplitude of each wave train utilizing the P-wave along the profile and aligns the arrival at one arbitrary time. This is done to compensate for possible variations in the acoustic energy source during the logging run. However, it is not essential to employ normalization, since it is not the amplitude of the tube wave which is of interest in the invention, but rather its slowness or velocity. Normalized data has been retrieved and plotted, as shown in Figs. 3 and 4, and is used to identify the tube wave arrivals for each receiver.

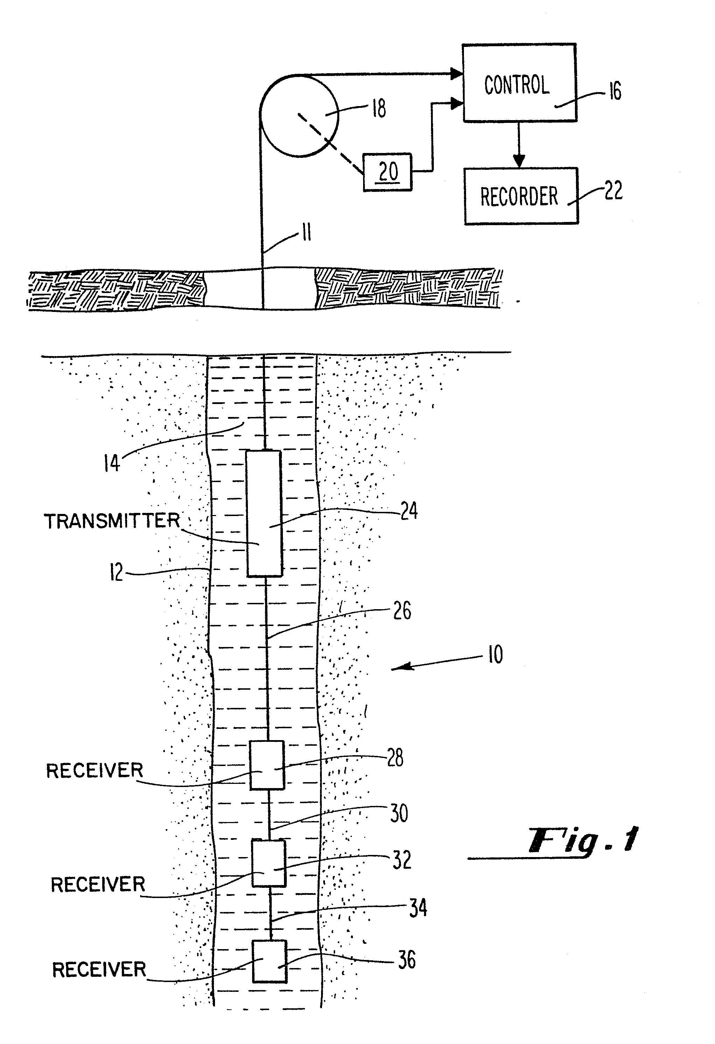

As is well known, the tube wave is a guided wave which, as described above, occurs in time after the compressional and shear waves. The tube wave corresponds to a radial bulging of the borehole and elliptic particle motion. The borehole logging tool illustrated in Figs. 1 and 2 is particularly well adapted to detection of tube waves, as the source-to-receiver spacing is sufficient to allow the compressional, shear and tube waves to separate at the position of data recording, thereby facilitating detection of the arrival of the tube waves. The wide bandwidth of the receiver 28, 32 further facilitates tube wave detection, as discussed above.

The relationship between tube waves and permeability is based on the fact that the tube wave causes fluid displacement from the borehole into a formation when the tool is opposite to a zone of permeability. An increase in formation permeability causes an increase in both the amount of fluid displacement as well as the amount of energy dissipated by the tube wave in moving the fluid. Dissipation of tube wave energy tends to slow its travel time. Accordingly, measurements of tube wave slowness, or conversely velocity, can provide a qualitative indication of high and low permeability zones.

In the present method, spaced receivers 28 and 32 are used to detect the arrival time of a tube wave event. The difference in arrival time of the tube wave at the receivers 28 and 32 provides a measure of tube wave slowness or velocity and, in turn, permeability of the formation in the area between the receivers 28 and 32. Alternatively, receivers 32 and 36 could be used, as could receivers 28 and 36.

When digitizing the received wave trains, successive samples of the analog wave train are taken for each receiver, with each sample being assigned a numerical sample number. The digitized wave trains of the two receivers 28, 32 are processed to compute
tube wave slowness as follows:

$$D_{tube}(dj) = \frac{I_{tube}(r_{far}dj) - I_{tube}(r_{near}dj) *S}{D}$$

where,

$D_{tube}(dj)$ = tube wave slowness at depth dj in $\mu$s/ft;

dj = depth where the jth waveform is recorded;

$I_{tube}(r_{far}dj)$ = the digital sample number at the onset,
i.e., arrival, of the tube wave in the wavetrain recorded by the far
receiver 32 at depth dj;

$I_{tube}(r_{near}df)$ = the digital sample number at the
onset, i.e., arrival, of the tube wave in the wavetrain recorded by
the near receiver 28 at depth dj;

S = sample rate in seconds; and

D = distance between receivers in feet.

By continuously computing and plotting $D_{tube}$ for each
depth dj traversed by the logging tool, a log of tube wave slowness,
or conversely velocity, can be produced.

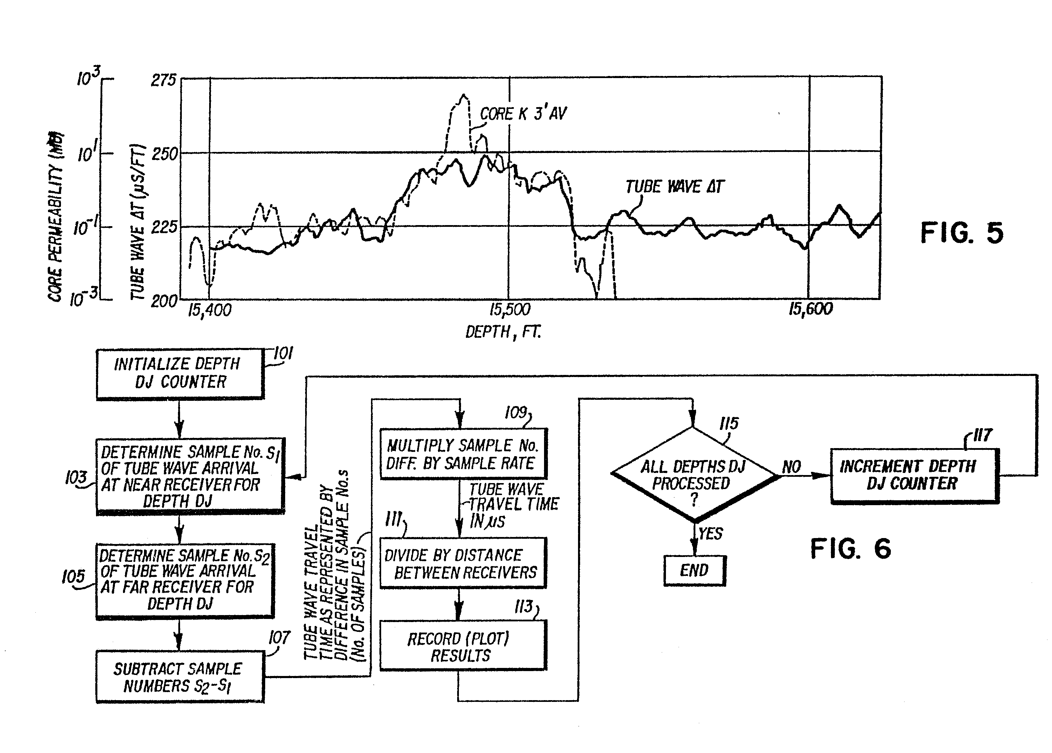

A processing flow chart is shown in Fig. 6 for a computer
program implementation of the tube wave slowness measurement.  In
the first step 101, a depth counter dj is initialized, after which,
in step 103, the digital sample number $S_1$ of the tube wave arrival
at the near receiver 28 for a depth dj is determined.  Following
this, in step 105, the sample number $S_2$ of the tube wave arrival
at the far receiver 32 is determined for depth dj.  The sample
numbers are then subtracted ($S_2 = S_1$) in Step 107 to yield a
numerical value corresponding to the tube wave slowness in the area
of the borehole between receivers 28 and 32 for a depth dj.  The numerical value is then multiplied, in step 109, by the sample rate (microseconds per sample) to yield a tube wave travel time in microseconds. This value is then divided by the distance between receivers, in step 111, to yield an inverse velocity value (slowness value) in microseconds/feet, which can be plotted directly or inverted and plotted as a velocity (f/$\mu$s) log value, in step 113. A determination is made, in step 115, whether all depth values dj have been processed and, if not, depth counter is incremented, in step 117, following which steps 103 through 115 are repeated until all depth values are processed, producing a record (log) of tube wave slowness (or velocity) versus depth.

An exemplary log showing correlation of tube wave slowness dj with actual core permeability measurements is shown in Fig. 5. The solid line represents a log of measured tube wave slowness, while the dotted line represents actual core measurements. The ordinate indicates formation permeability in millidarcies (MD). As can be seen, there is a considerable degree of correlation between measured tube wave slowness and actual formation permeability.

The determination of tube wave slowness or velocity is easily accomplished by a simple straightforward calculation based on digital sample numbers, the sampling frequency, and the distance between receivers, without requiring complicated processing. Moreover, since the present method is based on detecting tube wave arrivals rather than amplitude, it is largely unaffected by borehole conditions which would adversely affect tube wave amplitude.

The present method may be used alone to provide a quantitative measure of permeability, or can be used in connection with the tube wave amplitude logging method, described in British Patent Application No. 2,090,975A to provide a cross-check on permeability measurements made based on tube wave amplitude.

CLAIMS:

1. A method of determining the permeability of a formation, comprising the steps of:

traversing a borehole with a tool having means for transmitting low-frequency acoustic energy:

pulsing said transmitting means at a plurality of locations in said borehole to produce acoustic energy therein;

detecting for each location said produced acoustic energy at a first receiver having a low frequency response sufficient to detect tube waves in said acoustic energy;

detecting for each location said produced acoustic energy at a second receiver, spaced from the first, and having a low frequency response sufficient to detect tube waves in said acoustic energy;

determining respective arrival times of a tube wave at each of said first and second receivers for said plurality of locations;

determining a value representing the velocity of said tube wave from said arrival times for each of said plurality of locations; and

forming a record containing values representing tube wave velocity for each of said plurality of locations corresponding to the traversal of said borehole with said tool.

2. The method of Claim 1, further comprising the step of observing changes in the values representing tube wave velocity from one portion of said record corresponding to one of said locations to another portion of said record corresponding to another of said locations to monitor changes in permeability of said formation between said one and another locations.

3. The method of Claim 1 of Claim 2 wherein said values representing tube wave velocity are determined and recorded as a difference in arrival time between said first and second receivers.

4. The method of Claim 1 or Claim 2 wherein said values representing tube wave velocity are determined and recorded as a difference in arrival time between said first and second receivers divided by a value representing the distance between said first and second receivers.

5. The method of any preceding Claim wherein said record is in the form of a log of values representing tube wave velocity vs. borehole depth.

6. The method of any preceding Claim wherein said first and second receivers have a frequency response under borehole conditions of 0.1k Hz to 30k Hz.

7. The method of any preceding Claim wherein said first receiver is spaced from said transmitting means by a cable having a length exceeding 5 feet (1.52 m).

8. The method of Claim 7, wherein said cable length is about 15 feet (4.57 m).

9. The method of any preceding Claim wherein said first and second receivers are spaced by a distance of about 5 feet (1.52 m).

10. The method of any preceding Claim wherein said first and second receivers are interconnected solely by a cable.

2989H/0184H

_Fig.1_

*Fig. 2*

PRIOR ART

# FIG. 3

Labels on figure: COMPRESSIONAL WAVE, SHEAR WAVES, I M SEC, MUD WAVE, TUBE WAVES

FEET axis: 7615  7715  7815  7915  8015  8115  8215  8315  8415  8515  8615  8715  8815

# FIG. 4

I M SEC

SHEAR WAVES

TUBE WAVES

FEET 8720    8820    8920    9020    9120    9220    9320    9420    9520    9620    9720

MUDSTONE      SHALE      CLAYSTONE      SAND

0131351

FIG. 5

FIG. 6